# EUROPÄISCHE PATENTSCHRIFT

(11) **EP 4 570 513 B1**
(45) Veröffentlichungstag und Bekanntmachung des Hinweises auf die Patenterteilung: **22.07.2026**
(21) Anmeldenummer: 24212549.0
(22) Anmeldetag: 13.11.2024
(51) Int. Cl.: B60C 5/08, B60C 5/04

(54) **FAHRSCHLAUCH UND FAHRZEUGRAD**
TRAVELING HOSE AND VEHICLE WHEEL
TUYAU SOUPLE ET ROUE DE VÉHICULE

(30) Priorität: 13.12.2023 DE 102023212577
(43) Veröffentlichungstag der Anmeldung: 18.06.2025
(73) Patentinhaber: Continental Reifen Deutschland GmbH, 30175 Hannover (DE)
(72) Erfinder: Kahner, Rainer, 30175 Hannover (DE); Eder, Jan Martin, 30175 Hannover (DE); Krieger, Ralf, 30175 Hannover (DE); Grion, Mario, 30175 Hannover (DE)
(74) Vertreter: Continental Corporation

(56) Entgegenhaltungen:
- CN-A- 106 183 635
- CN-U- 201 646 269
- CN-U- 207 000 061
- JP-A- H1 016 523
- US-A- 5 785 779
- US-A1- 2011 041 975

## Beschreibung

Die Erfindung betrifft ein Fahrzeugrad aufweisend einen Fahrschlauch für ein Fahrzeug, bevorzugt für ein Leichtfahrzeug, besonders bevorzugt für ein Fahrrad und/oder einen Krankenfahrstuhl und/oder ein Motorrad, mit einem Schlauchkörper aus einem thermoplastischen Elastomer.

Fahrschläuche für Fahrzeuge, bevorzugt für Leichtfahrzeuge, besonders bevorzugt für ein Fahrrad und/oder einen Krankenfahrstuhl und/oder ein Motorrad, sind allgemein bekannt. Der Fahrschlauch für ein Fahrzeug ist zusammen mit einem für das Fahrzeug geeigneten Fahrzeugluftreifen auf einer Felge zu einem für das Fahrzeug geeigneten Rad montierbar. Der Fahrschlauch besteht in der Regel zumindest aus einem eine Luftkammer begrenzenden Schlauchkörper sowie einem Ventilschaft mit Ventil, durch welches die Luftkammer des Fahrzeugschlauchs mit Luft beaufschlagbar ist.

Bei einem Rad mit einem Fahrzeugschlauch erfüllt der Fahrzeugschlauch in der Regel die primäre Aufgabe, die Luftdichtigkeit des Rades im regulären Betrieb sicherzustellen. Doch der Fahrzeugschlauch kann auch zur Reduzierung der Pannenhäufigkeit beitragen.

Zur Abdichtung von Beschädigungen des Schlauches ist es bekannt, Dichtmittel wie etwa flüssig-viskose Füllmaterialien im Innenraum des Schlauches vorzusehen, welche im Falle einer Beschädigung des Schlauches das Loch abdichten sollen.

Mit derartigen Maßnahmen einher geht allerdings oftmals ein erhöhter Materialaufwand und damit verbunden ein erhöhter Rollwiderstand des Reifens und ein unvorteilhaftes Fahrverhalten.

Aus der DE 3021946 A1 sind luftlose Reifen mit einem inneren massiven Füllkörper aus einem Luftblasen enthaltenden Polyurethan bekannt. Hierdurch sind die Reifen zwar unempfindlicher gegenüber Durchstich, dies ist aber mit einem erheblichen Materialeinsatz verbunden.

Zur Reduzierung der Pannenhäufigkeit von Fahrzeugluftreifen an sich sind verschiedene Strategien bekannt. So kann der Reifen selbst verstärkt werden, beispielsweise durch eine Vergrößerung der Gummidicke einzelner Bauteile des Reifens, wie etwa dem Laufstreifen, oder durch zusätzliche hochfeste Gewebelagen. Durch derartige Maßnahmen kann beispielsweise das Durchdringen eines Festkörpers durch den Reifen erschwert oder gar verhindert werden.

So ist aus der DE 10 2005 018 742 A1 als auch aus der EP 1 682 362 B2 jeweils ein Fahrradreifen bekannt, der in einer zusätzlich zur Karkasse angeordneten Schutzlage des Reifens hochfeste Multifilamentgarne mit Polyester-polyarylat-Filamenten, welche aus geschmolzenem Flüssigkristallpolymer gesponnen sind, enthält.

Die Entwicklung geht zu einer verbesserten Nachhaltigkeit. Hierdurch gewinnt das Reifenrecycling, auch für Reifen für Leichtfahrzeuge, insbesondere Fahrradreifen, eine größere Bedeutung.

Bei den oben genannten in den Reifen integrierten Schutzlagen ist allerdings nachteilig, dass derartige hochfeste Festigkeitsträger aufgrund der Kombination von vergleichsweise hoher Reißfestigkeit mit hoher Flexibilität eher nicht spröde sind. Dies wiederum ist aber nachteilig für das an Bedeutung gewinnende Reifenrecycling, da die Festigkeitsträger bei der Scherung des Zerkleinerns nicht gut brechen. Zur Vermeidung der damit einhergehenden Nachteile wäre ein zusätzlicher Verfahrensschritt nötig.

Weitere Fahrschläuche, Schlauchreifen oder Fahrzeugräder sind in CN 106 183 635 A, US 2011/041975 A1, CN 207 000 061 U, US 5 785 779 A, JP H10 16523 A oder CN 201 646 269 U offenbart.

Es war die primäre Aufgabe der vorliegenden Erfindung, die vorstehend beschriebenen Nachteile des Standes der Technik auszuräumen oder zumindest zu verringern. Es war dabei die primäre Aufgabe, ein Fahrzeugrad für ein Fahrzeug, bevorzugt für ein Leichtfahrzeug, besonders bevorzugt für ein Fahrrad und/oder einen Krankenfahrstuhl und/oder ein Motorrad, zur Verfügung zu stellen, der eine verbesserte Pannensicherheit bei nur geringfügig höherem Rollwiderstand aufweist und der ein verbessertes Recycling ermöglicht.

Die Aufgabe wird in Bezug auf den Fahrschlauch dadurch gelöst, dass der Schlauchkörper zumindest in seinem Zenit eine Schutzlage mit Festigkeitsträgern aufweist.

Die Schutzlage ist somit nicht Teil eines Reifens sondern ist Bestandteil des Fahrschlauchs. Es hat sich herausgestellt, dass die Schutzlage auch als Teil des Schlauchs hervorragend zur Verbesserung des Pannenschutzes geeignet ist. Somit kann bei nur geringem Mehrgewicht eine deutlich verbesserte Robustheit des Schlauchs gegenüber Durchstichen und anderen Verletzungen erreicht werden. Im Falle eines Durchstichs des Fahrschlauches dichtet das thermoplastische Elastomer den Einstichkanal oftmals bereits so ab, dass ein größerer Luftverlust nicht eintritt und die Fahrt beendet werden kann.

Gleichzeitig ermöglicht der Schlauch aufweisend die verbesserten Pannenschutzeigenschaften den Einsatz eines Reifens ohne zusätzliche, in der Regel bezüglich Rollwiderstand und/oder Recyclingfähigkeit nachteiligen, Maßnahmen am Reifen. Dadurch, dass die Festigkeitsträger Teil des Schlauchs und nicht des Reifens sind, lassen sich diese einfach dem Recycling zuführen. Ein aufwändiges Abtrennen der Schutzlage beispielsweise von einem Reifen ist somit nicht nötig. Ein Recycling des Reifens und des Schlauchs aufweisend die Festigkeitsträger ist unabhängig möglich.

Der Einsatz des thermoplastischen Elastomers im Schlauch ermöglicht zudem eine einfache Abtrennung der Festigkeitsträger vom thermoplastischen Elastomer.

Thermoplastische Elastomere (TPE) sind mehrphasige Systeme: Sie haben eine die elastischen Eigenschaften bestimmende Weichphase mit einer Glasübergangstemperatur unter der Gebrauchstemperatur, sowie eine die thermoplastischen Eigenschaften bestimmende, in der Weichphase nicht lösliche thermoplastische Hartphase, welche den Schmelzbereich festlegt.

Das TPE kann durch Wärmeeinwirkung verflüssigt und somit auf einfache Art und Weise von weiteren Materialien des Schlauchs getrennt werden. Das so extrahierte TPE kann wiederverwertet werden. Ein insbesondere sortenreines Recycling ist hierdurch erleichtert.

Ein weiterer Vorteil besteht darin, dass der Schlauch eine einfache nachrüstbare Verbesserung des Pannenschutzes eines Rades ermöglicht.

Somit ist auf einfache Art und Weise ein Schlauch zur Verfügung gestellt, der eine verbesserte Pannensicherheit bei nur geringfügig höherem Rollwiderstand aufweist und der ein verbessertes Recycling ermöglicht.

Das TPE kann zumindest über die gesamte Längserstreckung des Schlauchkörpers angeordnet sein. Das TPE kann über den gesamten Umfang eines senkrecht zur Längserstreckungsrichtung U des Schlauchkörpers genommenen Querschnittes des Schlauchkörpers angeordnet sein. Der Schlauchkörper kann aus der Schutzlage und dem TPE bestehen.

Der Begriff "Leichtfahrzeug" bezeichnet im Sinne der Anmeldung Fahrzeuge mit einer Leermasse von maximal 425 kg (ohne Batterien bei Elektrofahrzeugen), bevorzugt Fahrräder und/oder Krankenfahrstühle und/oder Motorräder und/oder Fahrzeuge der Fahrzeugklasse L im Sinne der EU Verordnung 168/2013, welche jeweils die Erfordernisse der Leermasse von maximal 425 kg erfüllen.

Das Leichtfahrzeug, bevorzugt Fahrrad, kann rein mit Muskelkraft angetrieben sein und somit keinen Antriebsmotor aufweisen. Das Leichtfahrzeug, bevorzugt Fahrrad, kann aber auch einen Antriebsmotor, bevorzugt einen Elektromotor, zum Antrieb des Leichtfahrzeuges aufweisen. Der bevorzugt elektrische Antriebsmotor kann dabei als Hilfsmotor zur Trittunterstützung oder als alleiniger Antrieb des Fahrzeugs ausgelegt sein. Das Leichtfahrzeug, bevorzugt Fahrrad, kann als Lastenfahrzeug ausgelegt sein. Das Leichtfahrzeug kann zwei, drei, vier oder mehr Räder aufweisen.

Kraftfahrzeuge der Fahrzeugklasse L im Sinne der EU Verordnung 168/2013 umfassen insbesondere Fahrzeuge gemäß den Klassen L1e und/oder L2e und/oder L3e und/oder L4e und/oder L5e und/oder L6e.

Im Folgenden werden vorteilhafte Ausführungsformen der Erfindung erläutert.

Eine vorteilhafte Ausführungsform ist dadurch gegeben, dass das TPE ein expandiertes geschlossenporiges TPE ist. Als besonders geeignet hat sich expandiertes geschlossenporiges thermoplastisches Polyurethan herausgestellt.

Es hat sich gezeigt, dass sich das expandierte, d.h. geschäumte, geschlossenporige TPE hervorragend für den Schlauchkörper eignet.

Die Luftdichtigkeit des Schlauchs ist durch das expandierte geschlossenporige TPE weiterhin gegeben. Das expandierte geschlossenporige TPE vereint ein für die Materialstärke des Schlauchkörpers geringes Gewicht mit hoher Dauerbelastbarkeit. Zudem zeichnet sich der Schlauch aufgrund des hohen Luftanteils des expandierten TPE durch einen nur geringen Hystereseverlust aus.

Ebenso sind die Flexibilität sowie die Fahreigenschaften eines Luftreifens durch einen derartigen Schlauch nur geringfügig eingeschränkt.

Das expandierte geschlossenporige TPE weist eine hohe Elastizität auf. Im Falle eines Durchstichs des Schlauchs dichtet dann der Schlauchkörper aus dem expandierten geschlossenporigen TPE den Einstichkanal so ab, dass ein größerer Luftverlust vermieden oder verringert wird.

Es ist somit ein Schlauch zur Verfügung gestellt, der eine verbesserte Pannensicherheit bei gleichzeitig nur geringfügig verschlechtertem Rollwiderstand aufweist.

Zweckmäßig ist es, wenn der Schlauchkörper aufweisend das expandierte geschlossenporige TPE eine minimale Materialstärke Dmin von mindestens 0,5 mm, bevorzugt von mindestens 5 mm, besonders bevorzugt von mindestens 8 mm, aufweist.

Das expandierte geschlossenporige TPE vereint ein für die minimale Materialstärke des Schlauchkörpers geringes Gewicht mit hoher Dauerbelastbarkeit. Die vergrößerte Materialstärke eines solchen Schlauchkörpers verringert die Wahrscheinlichkeit eines vollständigen Durchstichs des Schlauchkörpers durch einen Fremdkörper. Gleichzeitig ermöglicht der Schlauchkörper aus dem expandierten geschlossenporigen TPE mit der vergrößerten minimalen Materialstärke Dmin durch die eigene Strukturfestigkeit verbesserte Notlaufeigenschaften selbst bei völligem Luftverlust.

Die Materialstärke, insbesondere die minimale Materialstärke Dmin, ist gemessen am drucklosen Schlauchkörper senkrecht zu einer nach außen weisenden Oberfläche des Schlauchkörpers.

Eine vorteilhafte Ausführungsform ist dadurch gegeben, dass das thermoplastische Elastomer homogen vorliegt.

Das TPE ist nicht expandiert. Ein derartiger Schlauchkörper ist einfach herstellbar und kann dünnwandig ausgeführt sein.

Eine vorteilhafte Ausführungsform ist dadurch gegeben, dass das thermoplastische Elastomer ein, insbesondere durch Block-Copolymerisation hergestelltes, Block-Copolymerisat, bevorzugt ein thermoplastisches Polyurethan (TPE-U), ist. Block-Copolymerisate eignen sich für den Schlauchkörper sowohl als expandiert geschlossenporig vorliegende TPE als auch als homogen vorliegende TPE, bevorzugt als expaniert geschlossenporig vorliegende TPE.

Vorteilhafte Block-Copolymerisate sind thermoplastische Polyurethane (TPE-U) aus Polyester und Polyurethan (PU) und/oder aus Polyether (PE) und Polyurethan (PU) und/oder thermoplastische Polystyrol-Polydien-Blockcopolymere (TPE-S) aus Polyisopren (IR) und Polystyrolen (PS) und/oder aus Polyethylen (PE) und Polystyrolen (PS) und/oder aus Polybutylen (PB) und Polystyrolen (PS) und/oder thermoplastische Polyester-Elastomere (TPE-E) aus Polyether und aromatischem Polyester und/oder thermoplastische Polyether-Polyamid-Elastomere (TPE-A) aus Polyether und aliphatischem Polyamid und/oder Ethylen-Vinylacetat-Kautschuk (EVM) mit 20-40 Gewichtsprozent Vinylacetat.

Als besonders vorteilhaft hat sich thermoplastisches Polyurethan (TPE-U) herausgestellt.

Thermoplastisches Polyurethan zeichnet sich durch vorteilhafte Rollwiderstandseigenschaften aus. Thermoplastisches Polyurethan zeichnet sich auch durch seine hervorragenden Recyclingeigenschaften auf. Eine Auftrennung der Materialien durch heiße Filtration ermöglicht sortenreines Stoffrecycling.

Bezüglich chemischen Recyclings ist keine Feedstock-Trennung in Polyurethan und Festigkeitsträger nötig, da depolymerisierte Bestandteile aufgetrennt und weiterverwendet werden können.

Zweckmäßig ist es, wenn das TPE-U expandiertes geschlossenporiges thermoplastisches Polyurethan ist. Es kann sich um das von der BASF SE unter dem Markennamen Infinergy ^{®} vertriebene Material handeln.

Zweckmäßig ist es aber auch, wenn das TPE-U homogenes thermoplastisches Polyurethan ist.

Es eigenen sich weitere thermoplastische Elastomere. Diese können homogen oder expandiert geschlossenporig, bevorzugt homogen, vorliegen.

Vorteilhaft sind etwa Mischungen unverträglicher Polymere, wie zum Beispiel unvernetzte thermoplastische Elastomere (TPE-O) aus Ethylen-Propylen-Kautschuk (EPM) und Polypropylen (PP) und/oder aus Ethylen-Propylen-DienKautschuk (EPDM) und Polypropylen (PP) und/oder vernetzte thermoplastische Elastomere (TPE-V ) aus Ethylen-Propylen-Kautschuk (EPDM) und Polypropylen (PP) und/oder aus Acrylnitril-Butadien-Kautschuk (Nitrilkautschuk, NBR) und Polypropylen (PP) und/oder aus Ethylen-Vinylacetat-Copolymere (EVA) und Polyvinylidenchlorid (PVDC).

Vorteilhaft sind auch mit Weichmachern versetzte teilkristalline Polymere, wie zum Beispiel mit Weichmachern versetztes Polyvinylchlorid (Weich-PVC) und/oder mit Olefinen versetzter Naturkautschuk.

Weitere Möglichkeiten folgen aus der Modifikation von Kautschuken, wie zum Beispiel durch Hydrochlorierung von Naturkautschuk sowie schwefelsaure Cyclisierung von Naturkautschuk.

Eine vorteilhafte Ausführungsform ist dadurch gegeben, dass die Schutzschicht des Schlauchkörpers zumindest im Zenit radial außerhalb des TPEs des

Schlauchkörpers angeordnet und/oder dass die Schutzschicht in das TPE des Schlauchkörpers ganz oder teilweise eingebettet angeordnet ist.

Bei der radial außerhalb des TPEs des Schlauchkörpers angeordneten Schutzschicht ist im Zenit nur radial innerhalb der Schutzschicht thermoplastisches Elastomer des Schlauchkörpers angeordnet. Eine radial außerhalb des TPEs des Schlauchkörpers angeordnete Schutzschicht schützt besonders effektiv vor Eindringen eines Festkörpers von außen. Gleichzeitig ist eine einfache Herstellbarkeit des Schlauchkörpers ermöglicht.

Bei der in das TPE des Schlauchkörpers ganz oder teilweise eingebettet angeordneten Schutzschicht ist im Zenit sowohl radial außerhalb als auch radial innerhalb der Schutzschicht thermoplastisches Elastomer des Schlauchkörpers angeordnet. Hierdurch ist eine besonders gute Einbettung der Schutzschicht in den Schlauchkörper erreichbar bei gleichzeitig guter Recyclingfähigkeit.

Eine vorteilhafte Ausführungsform ist dadurch gegeben, dass der Schlauch ein geschlossener Schlauch oder ein offener Schlauch ist.

Ein geschlossener Schlauch ermöglicht eine besonders einfache Handhabung.

Ein offener Schlauch kann alleine oder in Kombination des erfindungsgemäßen offenen Schlauchs mit einem herkömmlichen geschlossenen Schlauch und/oder mit einer Dichtmilch angewandt werden.

Die Schutzwirkung der Schutzlage ist wesentlich durch die Festigkeitsträger beeinflusst.

Die Festigkeitsträger können aus einer Faser oder aus mehreren Fasern gebildet sein.

Ein Festigkeitsträger aus einer Faser ist aus einem Einzelfilament gebildet. Ein Festigkeitsträger aus mehreren Fasern kann in Form eines Filamentbündels oder eines Garns oder eines Kords ausgebildet sein.

Ein Festigkeitsträger aufweisend ein Material kann ganz oder teilweise aus diesem Material gebildet sein Ein Festigkeitsträger aufweisend ein Material kann entsprechend ganz aus diesem Material gebildet sein. Insbesondere können alle Fasern des Festigkeitsträgers aus diesem Material gebildet sein. Ein Festigkeitsträger aufweisend ein Material kann auch nur teilweise aus diesem Material gebildet sein. Insbesondere kann der Festigkeitsträger eine oder mehrere Fasern aus diesem Material und zumindest eine Faser aus einem zu diesem Material verschiedenen Material aufweisen.

Eine vorteilhafte Ausführungsform ist dadurch gegeben, dass die Festigkeitsträger eine Zugfestigkeitsdichte von mindestens 0,04 GPa/(g/cm^3), bevorzugt von mindestens 0,3 GPa/(g/cm^3), besonders bevorzugt von mindestens 1,8 GPa/(g/cm^3), aufweisen. Die Zugfestigkeitsdichte ist dabei die Zugfestigkeit pro Massendichte.

Bei Verwendung von Festigkeitsträgern mit einer geringeren Zugfestigkeitsdichte als 0,04 GPa/(g/cm^3) ist keine ausreichende Schutzwirkung durch die Schutzlage gegeben.

Bereits eine Zugfestigkeitsdichte von mindestens 0,04 GPa/(g/cm^3) ermöglicht durch den Einsatz von festen leichten Materialien eine verbesserte Pannenschutzsicherheit bei vorteilhaftem Rollwiderstand.

Eine bevorzugte Zugfestigkeitsdichte von mindestens 0,3 GPa/(g/cm^3) ermöglicht einen noch besseren Pannenschutz bei vorteilhaftem Rollwiderstand.

Eine besonders bevorzugte Zugfestigkeitsdichte von mindestens 1,8 GPa/(g/cm^3) ermöglicht einen weiter verbesserten Pannenschutz bei vorteilhaftem Rollwiderstand.

Ein entsprechender Festigkeitsträger kann Polyester-polyarylat-Filamente und/oder Aramid und/oder PBO aufweisen oder daraus gebildet sein.

Zweckmäßig ist es, wenn die Festigkeitsträger eine Zugfestigkeitsdichte von mindestens 0,04 bis weniger als 0,3 GPa/(g/cm^3) aufweisen. Ein derartiger Festigkeitsträger kann Polyamid 6.6 aufweisen oder daraus gebildet sein.

Zweckmäßig kann es aber auch sein, wenn die Festigkeitsträger eine Zugfestigkeitsdichte von mindestens 0,3 bis weniger als 1,8 GPa/(g/cm^3) aufweisen. Ein derartiger Festigkeitsträger kann Stahl aufweisen oder daraus gebildet sein.

Eine vorteilhafte Ausführungsform ist dadurch gegeben, dass die Festigkeitsträger ganz oder teilweise aus textilem Festigkeitsträgermaterial gebildet sind, welches ausgewählt ist aus der Gruppe bestehend aus Polyester-polyarylat, Aramid und Polyphenylenbenzobioxazol (PBO).

Das Polyester-polyarylat liegt im Festigkeitsträger in der Regel als Polyester-polyarylat-Filamente vor, welche aus geschmolzenen Flüssigkristallpolymeren gesponnen sind.

Festigkeitsträger, welche ganz oder teilweise aus den Polyester-polyarylat-Filamenten gebildet sind, zeichnen sich durch eine besonders hohe Durchstichfestigkeit bei gleichzeitig hoher Flexibilität aus.

Zweckmäßig ist es, wenn die Festigkeitsträger aufweisend die Polyester-polyarylat-Filamente eine Zugfestigkeitsdichte von mindestens 1,8 GPa/(g/cm^3), bevorzugt von mindestens 2,0 GPa/(g/cm^3), aufweisen.

Die Festigkeitsträger aufweisend Polyester-polyarylat-Filamente können z.B. Multifilamentgarne des Typs Vectran^{®} der Kuraray Co. Ltd sein. Hierdurch können besonders hohe Durchstichfestigkeiten erzielt werden.

Zweckmäßig ist es, wenn die Polyester-polyarylat-Filamente einen Durchmesser von weniger als 0,040 mm aufweisen. Bei Verwendung derartig dünner Filamente erzielt man eine gute dynamische Haltbarkeit.

Durch Festigkeitsträger, die ganz oder teilweise aus Aramid gebildet sind, ist eine vorteilhafte Schutzwirkung ermöglicht.

Aramide sind insbesondere m-Aramid, p-Aramid und Mischungen aus m-Aramid und p-Aramid.

Die Festigkeitsträger aufweisend Aramid können eine Zugfestigkeitsdichte von mindestens 1,8 GPa/(g/cm^3) aufweisen.

Die Festigkeitsträger aufweisend Aramid können z.B. ganz oder teilweise aus Multifilamentgarnen des Typs Kevlar^{®} der DuPont de Nemours, Inc. gebildet sein. Hierdurch können besonders hohe Durchstichfestigkeiten erzielt werden.

Durch Festigkeitsträger, die ganz oder teilweise aus PBO gebildet sind, ist eine vorteilhafte Schutzwirkung ermöglicht.

Die Festigkeitsträger aufweisend PBO können eine Zugfestigkeitsdichte von mindestens 3,3 GPa/(g/cm^3) aufweisen.

Eine vorteilhafte Ausführungsform ist dadurch gegeben, dass die Festigkeitsträger ganz oder teilweise aus einem textilem Festigkeitsträgermaterial gebildet sind, welches ausgewählt ist aus der Gruppe bestehend aus Polyestern, Polyamiden, Polyurethanen, Glas, Kohlenstoff, Cellulosen, Polycarbonaten, Polyketonen und Kombinationen davon gebildet ist.

Vorteilhaft sind dabei Polyester. Polyester umfassen zum Beispiel Polyethylenterephthalat (PET) und/oder Polyethylennaphthalat (PEN) und/oder Polybutylenterephthalat (PBT) und/oder Polyethylenfuranoat (PEF). Vorteilhaft sind auch Polyamide. Beispiele für Polyamide sind Nylon-4,6 (PA 4.6) und/oder Nylon-4,10 (PA 4.10) und/oder Nylon-6 (PA 6) und/oder Nylon-6,6 (PA 6,6) und/oder Nylon-6,12 (PA 6.12) und/oder Nylon-10,10 (PA 10.10) und/oder Nylon-12,12 (PA 12.12). Geeignete Cellulosen sind beispielsweise regenerierte Cellulosen (insbesondere Viskose oder Kunstseide) und/oder Celluloseester. Die bevorzugten Materialien für das textile Festigkeitsträgermaterial sind Polyester und/oder Viskose und/oder Nylon und/oder Kombinationen davon.

Erfindungsgemäß ist vorgesehen, dass die Festigkeitsträger aus einem textilen Festigkeitsträgermaterial gebildet sind und aus einem oder mehreren Garnen bestehen und eine Gesamtfeinheit von 100 dtex bis 800 dtex aufweisen.

Derartige dünne textile Festigkeitsträger bieten einen vorteilhaften Pannenschutz bei gleichzeitig geringem Rollwiderstand.

Eine vorteilhafte Ausführungsform ist dadurch gegeben, dass die Festigkeitsträger ein oder mehrere Stahlfilamente aufweisen oder daraus gebildet sein.

Ein derartiger Schlauch mit Festigkeitsträgern aufweisend zumindest ein Stahlfilament weist einen hoher Schnittschutz und Durchstichschutz auf.

Die Festigkeitsträger aufweisend zumindest ein Stahlfilament können eine Zugfestigkeitsdichte von mindestens 0,3 bis weniger als 1,8 GPa/(g/cm^3) aufweisen.

Eine vorteilhafte Ausführungsform ist dadurch gegeben, dass die Festigkeitsträger in einem Gewebe, bevorzugt in einem Cordgewebe oder einem Kreuzgewebe, angeordnet sind.

Hierdurch ist die Anordnung der Festigkeitsträger erleichtert. Das Gewebe kann ganz oder teilweise aus den Festigkeitsträgern gebildet sein. Die Festigkeitsträger können im Gewebe alle in der gleichen Richtung orientiert sein. Festigkeitsträger können aber auch kreuzend zueinander angeordnet sein. Alle Festigkeitsträger können dabei gleich ausgebildet sein. Die Festigkeitsträger können sich aber auch insbesondere bezüglich ihres Materials voneinander unterscheiden. Hierdurch können die Vorteile unterschiedlicher Festigkeitsträger miteinander kombiniert werden. Es können zwei oder mehr unterschiedliche Arten von Festigkeitsträgern zum Einsatz kommen, wobei sich die Arten in ihrem Material unterscheiden können.

Ein Cordgewebe ermöglicht einen besonders vorteilhaften Rollwiderstand, ein Kreuzgewebe ist besonders vorteilhaft bezüglich des Pannenschutzes.

Eine vorteilhafte Ausführungsform ist dadurch gegeben, dass der Schlauch geeignet ist für eine Reifenbreite mit einem Wert von 18 mm bis 122 mm, bevorzugt von 23 mm bis 65 mm oder von 50 mm bis 122 mm.

Ein Schlauch wird in der Regel passend zur Reifenbreite und -größe des Reifens, gewählt, mit welchem er zusammen auf einer Felge zum Rad montiert und als Teil des Rades am Fahrzeug angebracht wird bzw. ist. Ein Schlauch ist dabei meist mit mehreren Reifenbreiten kompatibel. Mit welchen Reifenbreiten der konkrete Schlauch kompatibel ist, wird in der Regel vom Hersteller angegeben. Die Reifenbreite ist die nominelle Querschnittsbreite des Reifens gemäß E.T.R.T.O. in der zum Anmeldezeitpunkt dieser Patentanmeldung geltenden Fassung.

Der Schlauch eignet sich hervorragend für Fahrzeuge mit Reifen der angegebenen Reifenbreite zur Verbesserung der Pannensicherheit bei gleichzeitig vorteilhaftem Rollwiderstand, bevorzugt für Krankenfahrstühle und/oder Fahrräder mit Reifen der angegebenen Reifenbreite.

Der Schlauch kann vorgesehen und geeignet sein für eine Reifenbreite mit einem Wert von 23 mm bis 42 mm. Ein solcher Schlauch eignet sich für ein Rennrad.

Der Schlauch kann vorgesehen und geeignet sein für eine Reifenbreite mit einem Wert von 30 mm bis 65 mm. Ein solcher Schlauch eignet sich hervorragend für ein Gravelbike, City- oder Treckingrad.

Der Schlauch kann vorgesehen und geeignet sein für eine Reifenbreite mit einem Wert von 32 mm bis 55 mm. Ein solcher Schlauch eignet sich hervorragend für einen Krankenfahrstuhl.

Der Schlauch kann vorgesehen und geeignet sein für eine Reifenbreite mit einem Wert von 50 mm bis 122 mm. Ein solcher Schlauch eignet sich hervorragend für ein Mountainbike.

Eine vorteilhafte Ausführungsform ist dadurch gegeben, dass es sich um einen Schlauch für ein Fahrrad und/oder einen Rollstuhl, bevorzugt für ein Fahrrad, handelt.

Der Begriff "Fahrrad" umfasst im Sinne der Anmeldung Fahrräder unterschiedlichster Art, insbesondere Fahrräder mit zwei oder mehr Rädern. Das Fahrrad kann rein mit Muskelkraft angetrieben sein und somit keinen Antriebsmotor aufweisen. Das Fahrrad kann aber auch einen Antriebsmotor, bevorzugt einen Elektromotor, zum Antrieb des Fahrrades aufweisen. Der bevorzugt elektrische Antriebsmotor kann dabei als Hilfsmotor zur Trittunterstützung, wie beispielsweise bei einem Pedelec oder einem S-Pedelec, ausgelegt sein. Es kann sich dabei um ein Lastenrad handeln, wie es beispielsweise zur Paketauslieferung genutzt wird.

Eine verbesserte Pannensicherheit bei gleichzeitig geringem Rollwiderstand ist bei Fahrrädern von großer Wichtigkeit. Der erfindungsgemäße Schlauch ermöglicht eine entsprechende Verbesserung, ohne aufwändig den Fahrradmantel an sich zu ändern.

Bei einem Einsatz des Schlauches bei einem Fahrrad mit motorischem Hilfsantrieb ist ein hoher Pannenschutz vorteilhaft, da er die Zuverlässigkeit des Fahrzeuges erhöht. Gleichzeitig ermöglicht der geringe Rollwiderstand eine große Reichweite des Fahrrades.

Eine Erhöhung der Pannensicherheit ist auch für einen Krankenfahrstuhl von größter Wichtigkeit.

Eine vorteilhafte Ausführungsform ist dadurch gegeben, dass es sich um einen Schlauch für ein Leichtfahrzeug mit einem motorischen Antrieb, bevorzugt mit einem motorischen Hilfsantrieb oder einem rein motorischen Antrieb, handelt.

Auch für Leichtfahrzeuge mit einem motorischen Antrieb ist ein derartiger Schlauch mit verbesserter Pannensicherheit und großer Reichweite vorteilhaft.

Der bevorzugt elektrische motorische Hilfsantrieb kann als Hilfsmotor der Trittunterstützung dienen.

Der Schlauch kann geeignet sein für ein Leichtfahrzeug mit einem rein motorischen Antrieb, etwa für ein entsprechendes Kleinkraftrad und/oder Leichtkraftrad und/oder Kleinkraftrad und/oder Kraftrad und/oder Motorrad und/oder leichtes Squad.

In Bezug auf das Fahrzeugrad wird die Aufgabe gelöst durch ein Fahrzeugrad für ein Fahrzeug, bevorzugt für ein Leichtfahrzeug, besonders bevorzugt für ein Fahrrad und/oder einen Krankenfahrstuhl und/oder ein Motorrad, aufweisend eine Felge, einen auf der Felge montierten Fahrschlauch gemäß zumindest einem der vorhergehenden Ansprüche und einen auf der Felge montierten Fahrzeugluftreifen.

Ein solches Fahrzeugrad weist eine hohe Pannensicherheit bei gleichzeitig nur geringfügig verringerten Rollwiderstandseigenschaften auf. Bevorzugt handelt es sich um ein Fahrzeugrad für ein Leichtfahrzeug, besonders bevorzugt für ein Fahrrad und/oder einen Krankenfahrstuhl und/oder ein Motorrad.

Die Tabelle 1 zeigt Beispiele für vorteilhafte Festigkeitsträger der Schutzlage gemäß der Erfindung. Ein erfindungsgemäßer Schlauch aufweisend derartige Festigkeitsträger in seiner Schutzschicht des TPE aufweisenden Schlauchkörpers weist einen vorteilhaften Pannenschutz bei gleichzeitig guter Recyclingfähigkeit auf. Festigkeitsträger sind aus dem jeweils angegebenen Material gebildet. Die Festigkeitsträger 1 bis 4 sind aus jeweils einem Garn aus dem angegebenen textilen Festigkeitsträgermaterial und der angegebenen Feinheit ausgebildet. Der Festigkeitsträger 5 ist aus einem Stahlfilament gebildet.

**Tabelle 1**

| Nr. | Material | Feinheit [dtex] | Zugfestigkeitsdichte [GPa/(g/cm^3)] |
|---|---|---|---|
| 1 | Vectran | 440 | 2,3 |
| 2 | PBO | 550 | 3,9 |
| 3 | Aramid | 420 | 2,1 |
| 4 | Nylon | 470 | 0,1 |
| 5 | Stahl | | 0,4 |

Alle in dieser Beschreibung wiedergegebenen Ausführungsformen der erfindungsgemäßen Schläuche bzw. Fahrzeugräder stellen Beispiele der Ausgestaltung der Erfindung dar und sind nicht einschränkend zu sehen. Entsprechend sind auch durch einzelne oder mehrere Merkmale einer Ausführungsform alleine oder die Kombination der Merkmale verschiedener Ausführungsformen weitere Ausführungsformen der Erfindung gegeben, die Gegenstand der Erfindung sind, soweit diese nicht explizit anders in der Beschreibung erläutert wird. Ferner sind auch Kombinationen von bevorzugten und besonders bevorzugten Ausführungsformen untereinander miteinander kombinierbar.

Weitere Merkmale, Vorteile und Einzelheiten der Erfindung werden nun anhand der schematischen Zeichnungen, die Ausführungsbeispiele darstellen, näher erläutert.

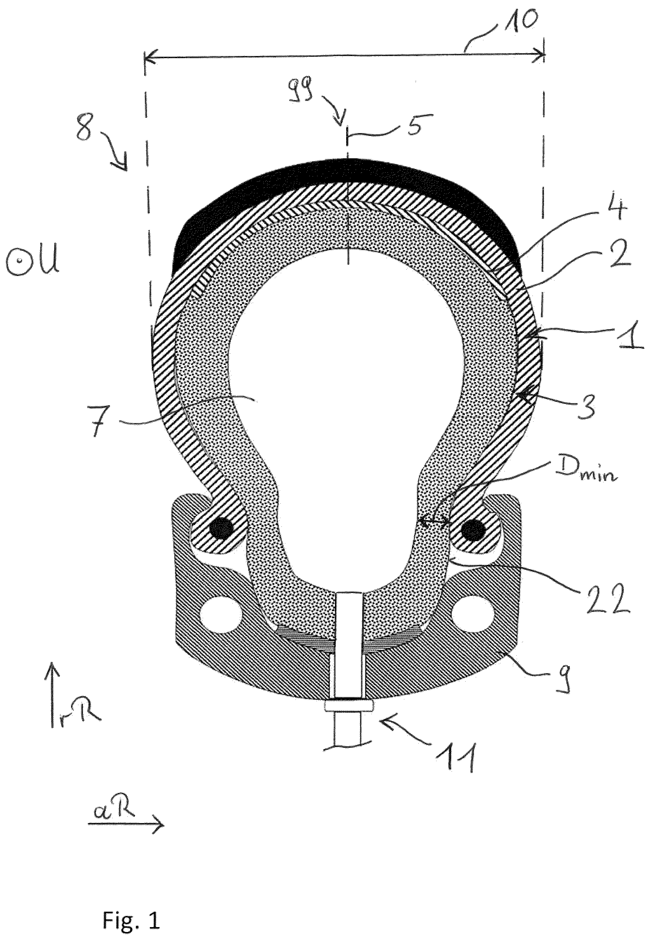

Dabei zeigt die
Fig. 1 bis Fig. 2 jeweils einen Querschnitt eines Fahrzeugrades aufweisend einen erfindungsgemäßen Fahrschlauch.

Die Fig. 1 bis Fig. 2 zeigen jeweils einen Querschnitt eines Fahrzeugrades 8 aufweisend eine Felge 9, einen auf der Felge montierten erfindungsgemäßen Fahrschlauch 1 und einen auf der Felge 9 montierten Fahrzeugluftreifen 2. Es handelt sich um ein Rad 8 für ein Leichtfahrzeug, bevorzugt für ein Fahrrad. Entsprechend ist der Fahrschlauch 1 ein Fahrschlauch für ein Leichtfahrzeug, bevorzugt für ein Fahrrad.

Der Fahrschlauch 1 weist einen eine Luftkammer 7 einschließenden Schlauchkörper 3 sowie einen Ventilschaft 11 auf, durch welchen die Luftkammer 7 des Fahrzeugschlauchs mit Luft beaufschlagbar ist.

Der Schlauchkörper 3 ist ganz oder teilweise aus einem thermoplastischen Elastomer (TPE) sowie einer zumindest in seinem Zenit angeordneten Schutzlage 4 aufweisend Festigkeitsträger ausgebildet. Das TPE ist zumindest über die gesamte Längserstreckung des Schlauchkörpers 3 angeordnet. Das TPE ist über den gesamten Umfang eines senkrecht zur Längserstreckungsrichtung U des Schlauchkörpers genommenen Querschnittes des Schlauchkörpers angeordnet.. Der Schlauchkörper 3 kann aus der Schutzlage 4 und dem TPE bestehen.

Das TPE ist ein, insbesondere durch Block-Copolymerisation hergestelltes, Block-Copolymerisat, bevorzugt ein thermoplastisches Polyurethan (TPE-U). Das TPE ist als expandiertes geschlossenporiges TPE, bevorzugt als expandiertes geschlossenporiges TPE-U, ausgebildet. Der Schlauchkörper 3 kann dabei eine minimale Materialstärke Dmin von mindestens 0,5 mm, bevorzugt von mindestens 5 mm, besonders bevorzugt von mindestens 8 mm, aufweisen, gemessen am drucklosen Schlauchkörper senkrecht zu einer nach außen weisenden Oberfläche 22 des Schlauchkörpers. Das TPE kann aber auch homogen ausgebildet sein. Die minimale Materialstärke kann dann kleiner gewählt sein.

Es eignen sich aber auch andere TPE wie Mischungen unverträglicher Polymere, mit Weichmachern versetzte teilkristalline Polymere und/oder modifizierter Kautschuk. Auch diese TPE können expandiert geschlossenporig oder homogen, bevorzugt homogen, vorliegen.

Die Festigkeitsträger der Schutzlage 4 sind aus einer oder mehreren Fasern gebildet. Sie können in Form von Einzelfilamenten, von Filamentbündeln, von Garnen oder Korden ausgebildet sein. Es kann sich um Festigkeitsträger gemäß den in der Tabelle 1 angegebenen Festigkeitsträgern 1 bis 5 handeln.

Die Festigkeitsträger können eine Zugfestigkeitsdichte von mindestens 0,04 GPa/(g/cm^3), bevorzugt von mindestens 0,3 GPa/(g/cm^3), besonders bevorzugt von mindestens 1,8 GPa/(g/cm^3), aufweisen.

Eine Zugfestigkeitsdichte von mindestens 1,8 GPa/(g/cm^3) ermöglicht einen weiter verbesserten Pannenschutz. Ein entsprechender Festigkeitsträger kann Polyester-polyarylat und/oder Aramid und/oder PBO, bevorzugt Polyester-polyarylat, aufweisen oder daraus gebildet sein. Das Polyester-polyarylat liegt im Festigkeitsträger in der Regel als Polyester-polyarylat-Filamente vor, welche aus geschmolzenen Flüssigkristallpolymeren gesponnen sind. Die Festigkeitsträger können aber auch eine Zugfestigkeitsdichte von mindestens 0,04 bis weniger als 0,3 GPa/(g/cm^3) aufweisen. Ein derartiger Festigkeitsträger kann Polyamid 6.6 aufweisen oder daraus gebildet sein. Die Festigkeitsträger können auch eine Zugfestigkeitsdichte von mindestens 0,3 bis weniger als 1,8 GPa/(g/cm^3) aufweisen. Ein derartiger Festigkeitsträger kann Stahl aufweisen oder daraus gebildet sein. Der entsprechende Festigkeitsträger kann ein oder mehrere Stahlfilamente aufweisen oder daraus gebildet sein.

Die Festigkeitsträger können aus einem textilen Festigkeitsträgermaterial gebildet sein und aus einem oder mehreren Garnen bestehen und eine Gesamtfeinheit von 100 dtex bis 800 dtex aufweisen.

Die Festigkeitsträger der Schutzlage 4 können in einem Gewebe, bevorzugt in einem Cordgewebe oder einem Kreuzgewebe, angeordnet sein.

Der Fahrschlauch 1 kann vor der Montage ein geschlossener Fahrschlauch sein oder vor der Montage ein offener Fahrschlauch sein.

Der dargestellte Reifen 8 kann jeweils eine Reifenbreite 10 (nominelle Querschnittsbreite gemäß E.T.R.T.O.) mit einem Wert von 18 mm bis 122 mm, bevorzugt von 23 mm bis 65 mm oder von 50 mm bis 122 mm, aufweisen. Der jeweils zusammen mit dem Reifen 8 dargestellte Fahrschlauch 1 weist dann eine Eignung für die entsprechende Reifenbreite 10 auf.

Der in der Figur 1 dargestellte Schlauch 1 zeichnet sich dadurch aus, dass die Schutzschicht 4 des Schlauchkörpers 3 zumindest im Zenit 99 radial außerhalb des TPEs des Schlauchkörpers 3 angeordnet ist.

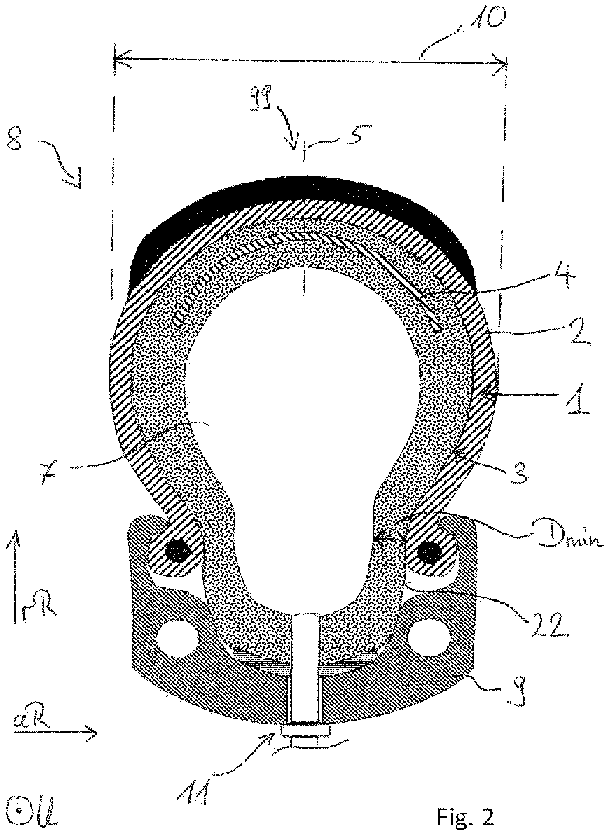

Der in der Figur 2 dargestellte Schlauch 1 zeichnet sich dadurch aus, dass die Schutzschicht 4 in das TPE des Schlauchkörpers 3 eingebettet angeordnet ist.

Bevorzugt handelt es sich in den Figuren 1 bis 2 jeweils um ein Rad bzw. einen Fahrschlauch für ein Fahrrad. Es kann sich um ein Rennrad, Trackingrad, Mountainbike, Gravelbike/CX oder Pedelec- bzw. S-Pedelec handeln. Der Fahrschlauch 1 ist in seiner Dimension an die Reifenbreite 10 und an den Reifendurchmesser abgestimmt.

Die Erfindung ist aber nicht auf einen Fahrschlauch für einen Fahrradreifen bzw. ein Rad für ein Fahrrad beschränkt. Gemäß der Erfindung ausgeführte Schläuche bzw. Räder können ferner für Fahrzeuge unterschiedlichen Typs, bevorzugt für ein Leichtfahrzeug, besonders bevorzugt für ein Fahrrad und/oder ein Motorrad und/oder einen Rollstuhl und/oder ein Leichtkraftfahrzeug, sein. Das Leichtfahrzeug kann einen Antriebsmotor als Hilfsmotor zur Trittunterstützung oder als alleinigen Antrieb aufweisen. Das Leichtfahrzeug kann aber auch keinen Antriebsmotor aufweisen.

### Bezugszeichenliste

- 1: Fahrschlauch
- 2: Fahrzeugluftreifen
- 3: Schlauchkörper
- 4: Schutzlage
- 5: axiale Mitte
- 7: Luftkammer
- 8: Fahrzeugrad
- 9: Felge
- 10: Reifenbreite
- 11: Ventilschaft
- 22: äußere Oberfläche des Schlauchkörpers
- 99: Zenit
- Dmin: minimaler Wert der Materialstärke
- U: Längserstreckungsrichtung
- rR: radiale Richtung
- aR: axiale Richtung

## Patentansprüche

1. Fahrzeugrad (8) für ein Fahrzeug, bevorzugt für ein Leichtfahrzeug, besonders bevorzugt für ein Fahrrad und/oder einen Krankenfahrstuhl und/oder ein Motorrad, aufweisend eine Felge (9), einen auf der Felge montierten Fahrschlauch (1) mit einem Schlauchkörper (3) aufweisend ein thermoplastisches Elastomer (TPE), und einen auf der Felge montierten Fahrzeugluftreifen (2),
**dadurch gekennzeichnet, dass**
der Schlauchkörper (3) zumindest in seinem Zenit (99) eine Schutzlage (4) mit Festigkeitsträgern aufweist,
wobei die Schutzschicht (4) des Schlauchkörpers (3) zumindest im Zenit (99) radial außerhalb des thermoplastisches Elastomers (TPE) des Schlauchkörpers (3) angeordnet ist, und
wobei die Festigkeitsträger aus einem textilen Festigkeitsträgermaterial gebildet sind und aus einem oder mehreren Garnen bestehen und eine Gesamtfeinheit von 100 dtex bis 800 dtex aufweisen.

2. Fahrzeugrad (8) nach Anspruch 1, **dadurch gekennzeichnet, dass** das TPE ein expandiertes geschlossenporiges TPE ist.

3. Fahrzeugrad (8) nach zumindest einem der vorhergehenden Ansprüche, **dadurch gekennzeichnet, dass** das thermoplastische Elastomer homogen vorliegt.

4. Fahrzeugrad (8) nach zumindest einem der vorhergehenden Ansprüche, **dadurch gekennzeichnet, dass** das thermoplastische Elastomer ein Block-Copolymerisat und/oder eine Mischung unverträglicher Polymere und/oder ein mit Weichmachern versetztes teilkristallines Polymer und/oder ein modifizierter Kautschuk, bevorzugt ein Block-Copolymerisat, besonders bevorzugt thermoplastisches Polyurethan (TPE-U), ist.

5. Fahrzeugrad (8) nach zumindest einem der vorhergehenden Ansprüche, **dadurch gekennzeichnet, dass** die Schutzschicht in das TPE des Schlauchkörpers eingebettet angeordnet ist.

6. Fahrzeugrad (8) nach zumindest einem der vorhergehenden Ansprüche, **dadurch gekennzeichnet, dass**
der Schlauch ein geschlossener Schlauch oder ein offener Schlauch ist.

7. Fahrzeugrad (8) nach zumindest einem der vorhergehenden Ansprüche, **dadurch gekennzeichnet, dass** die Festigkeitsträger eine Zugfestigkeitsdichte von mindestens 0,04 GPa/(g/cm^3), bevorzugt von mindestens 0,3 GPa/(g/cm^3), besonders bevorzugt von mindestens 1,8 GPa/(g/cm^3), aufweisen.

8. Fahrzeugrad (8) nach zumindest einem der vorhergehenden Ansprüche, **dadurch gekennzeichnet, dass** die Festigkeitsträger ganz oder teilweise aus textilem Festigkeitsträgermaterial gebildet sind, welches ausgewählt ist aus der Gruppe bestehend aus Polyester-polyarylat, Aramid und Polyphenylenbenzobioxazol (PBO).

9. Fahrzeugrad (8) nach zumindest einem der vorhergehenden Ansprüche, **dadurch gekennzeichnet, dass** die Festigkeitsträger ganz oder teilweise aus einem textilem Festigkeitsträgermaterial gebildet sind, welches ausgewählt ist aus der Gruppe bestehend aus Polyestern, Polyamiden, Polyurethanen, Glas, Kohlenstoff, Cellulosen, Polycarbonaten, Polyketonen und Kombinationen davon gebildet ist.

10. Fahrzeugrad (8) nach zumindest einem der vorhergehenden Ansprüche, **dadurch gekennzeichnet, dass** die Festigkeitsträger ein oder mehrere Stahlfilamente aufweisen oder daraus gebildet sein.

11. Fahrzeugrad (8) nach zumindest einem der vorhergehenden Ansprüche, **dadurch gekennzeichnet, dass** die Festigkeitsträger in einem Gewebe, bevorzugt in einem Cordgewebe oder einem Kreuzgewebe, angeordnet sind.

12. Fahrzeugrad (8) nach zumindest einem der vorhergehenden Ansprüche, **dadurch gekennzeichnet, dass** der Fahrzeugluftreifen (2) eine Reifenbreite (10) mit einem Wert von 18 mm bis 122 mm, bevorzugt von 23 mm bis 65 mm oder von 50 mm bis 122 mm, aufweist.

13. Fahrzeugrad (8) nach zumindest einem der vorhergehenden Ansprüche, **dadurch gekennzeichnet, dass** es sich um einen Schlauch für ein Fahrrad und/oder einen Rollstuhl, bevorzugt für ein Fahrrad, handelt.

## Claims

1. Vehicle wheel (8) for a vehicle, preferably for a light vehicle, particularly preferably for a bicycle and/or a wheelchair and/or a motorcycle, comprising a rim (9), an inner tube (1) which is mounted on the rim and comprises a tube body (3) comprising a thermoplastic elastomer (TPE), and a pneumatic vehicle tyre (2) mounted on the rim,
**characterized in that**
the tube body (3) comprises a protective layer (4) comprising strength members at least in its crown (99),
wherein at least in the crown (99) the protective layer (4) of the tube body (3) is arranged radially outward of the thermoplastic elastomer (TPE) of the tube body (3) and
wherein the strength members are formed from a textile strength member material and consist of one or more yarns and have a total fineness of 100 dtex to 800 dtex.

2. Vehicle wheel (8) according to Claim 1, **characterized in that** the TPE is an expanded closed-pore TPE.

3. Vehicle wheel (8) according to at least one of the preceding claims, **characterized in that** the thermoplastic elastomer is homogeneous.

4. Vehicle wheel (8) according to at least one of the preceding claims, **characterized in that** the thermoplastic elastomer is a block copolymer and/or a mixture of incompatible polymers and/or a semi-crystalline polymer admixed with plasticizers and/or a modified rubber, preferably a block copolymer, particularly preferably thermoplastic polyurethane (TPE-U).

5. Vehicle wheel (8) according to at least one of the preceding claims, **characterized in that** the protective layer is embedded in the TPE of the tube body.

6. Vehicle wheel (8) according to at least one of the preceding claims, **characterized in that**
the tube is a closed tube or an open tube.

7. Vehicle wheel (8) according to at least one of the preceding claims, **characterized in that** the strength members have a tensile strength density of at least 0.04 GPa/(g/cm^3), preferably of at least 0.3 GPa/(g/cm^3), particularly preferably of at least 1.8 GPa/(g/cm^3).

8. Vehicle wheel (8) according to at least one of the preceding claims, **characterized in that** the strength members are completely or partially formed from textile strength member material selected from the group consisting of polyester polyarylate, aramid and polyphenylene benzobisoxazole (PBO).

9. Vehicle wheel (8) according to at least one of the preceding claims, **characterized in that** the strength members are completely or partially formed from a textile strength member material selected from the group consisting of polyesters, polyamides, polyurethanes, glass, carbon, celluloses, polycarbonates, polyketones and combinations thereof.

10. Vehicle wheel (8) according to at least one of the preceding claims, **characterized in that** the strength members comprise one or more steel filaments or are formed therefrom.

11. Vehicle wheel (8) according to at least one of the preceding claims, **characterized in that** the strength members are arranged in a fabric, preferably in a corduroy fabric or a canvas.

12. Vehicle wheel (8) according to at least one of the preceding claims, **characterized in that** the pneumatic vehicle tyre (2) has a tyre width (10) having a value of 18 mm to 122 mm, preferably of 23 mm to 65 mm or of 50 mm to 122 mm.

13. Vehicle wheel (8) according to at least one of the preceding claims, **characterized in that** it is a tube for a bicycle and/or a wheelchair, preferably for a bicycle.

## Revendications

1. Roue (8) de véhicule pour un véhicule, de manière préférée pour un véhicule léger, de manière particulièrement préférée pour un vélo et/ou un fauteuil roulant électrique et/ou une motocyclette, comportant une jante (9), une chambre à air de déplacement (1) montée sur la jante avec un corps de chambre à air (3) comportant un élastomère thermoplastique (TPE), et un pneumatique (2) de véhicule monté sur la jante,
**caractérisée en ce que**
le corps de chambre à air (3) comporte au moins dans son zénith (99) une couche de protection (4) avec des éléments de renfort,
la couche de protection (4) du corps de chambre à air (3) étant disposée au moins dans le zénith (99) radialement à l'extérieur de l'élastomère thermoplastique (TPE) du corps de chambre à air (3), et
les éléments de renfort étant formés à partir d'un matériau d'élément de renfort textile et étant constitués d'un ou de plusieurs fils et présentant une finesse totale de 100 dtex à 800 dtex.

2. Roue (8) de véhicule selon la revendication 1, **caractérisée en ce que** le TPE est un TPE expansé à pores fermés.

3. Roue (8) de véhicule selon au moins l'une des revendications précédentes, **caractérisée en ce que** l'élastomère thermoplastique présent est homogène.

4. Roue (8) de véhicule selon au moins l'une des revendications précédentes, **caractérisée en ce que** l'élastomère thermoplastique est un copolymère en bloc et/ou un mélange de polymères incompatibles et/ou un polymère semi-cristallin mélangé avec des plastifiants et/ou un caoutchouc modifié, de manière préférée un copolymère en bloc, de manière particulièrement préférée un polyuréthane thermoplastique (TPE-U).

5. Roue (8) de véhicule selon au moins l'une des revendications précédentes, **caractérisée en ce que** la couche de protection est intégrée dans le TPE du corps de chambre à air.

6. Roue (8) de véhicule selon au moins l'une des revendications précédentes, **caractérisée en ce que**
la chambre à air est une chambre à air fermée ou une chambre à air ouverte.

7. Roue (8) de véhicule selon au moins l'une des revendications précédentes, **caractérisée en ce que** les éléments de renfort présentent une densité de résistance à la traction d'au moins 0,04 GPa/(g/cm^3), de préférence d'au moins 0,3 GPa/(g/cm^3), de manière particulièrement préférée d'au moins 1,8 GPa/(g/cm^3).

8. Roue (8) de véhicule selon au moins l'une des revendications précédentes, **caractérisée en ce que** les éléments de renfort sont entièrement ou partiellement formés à partir d'un matériau d'élément de renfort textile, qui est choisi dans le groupe comprenant le polyarylate de polyester, l'aramide et le polyphénylène benzobioxazole (PBO).

9. Roue (8) de véhicule selon au moins l'une des revendications précédentes, **caractérisée en ce que** les éléments de renfort sont entièrement ou partiellement formés à partir d'un matériau d'élément de renfort textile, qui est choisi dans le groupe comprenant des polyesters, des polyamides, des polyuréthanes, du verre, du carbone, des celluloses, des polycarbonates, des polycétones et des combinaisons de ceux-ci.

10. Roue (8) de véhicule selon au moins l'une des revendications précédentes, **caractérisée en ce que** les éléments de renfort comportent un ou plusieurs filaments d'acier ou sont formés à partir de ceux-ci.

11. Roue (8) de véhicule selon au moins l'une des revendications précédentes, **caractérisée en ce que** les éléments de renfort sont disposés dans un tissu, de manière préférée dans un tissu à cordes ou dans un tissu croisé.

12. Roue (8) de véhicule selon au moins l'une des revendications précédentes, **caractérisée en ce que** le pneumatique (2) de véhicule présente une largeur de pneumatique (10) avec une valeur de 18 mm à 122 mm, de manière préférée de 23 mm à 65 mm ou de 50 mm à 122 mm.

13. Roue (8) de véhicule selon au moins l'une des revendications précédentes, **caractérisée en ce qu'**il s'agit d'une chambre à air pour une bicyclette et/ou un fauteuil roulant, de manière préférée pour une bicyclette.
